(19) Europäisches Patentamt
European Patent Office
Office européen des brevets

(11) **EP 2 059 046 B1**

(12) **EUROPEAN PATENT SPECIFICATION**

(45) Date of publication and mention
of the grant of the patent:
**25.08.2010 Bulletin 2010/34**

(51) Int Cl.:
*H04N 7/18* (2006.01)     *H04N 5/262* (2006.01)
*G06T 3/00* (2006.01)     *G06T 5/00* (2006.01)
*G09G 5/00* (2006.01)

(21) Application number: **08017405.5**

(22) Date of filing: **02.10.2008**

(54) **Method and system for combining videos for display in real-time**

Verfahren und System zum Kombinieren von Videos zur Anzeige in Echtzeit

Procédé et système pour la combinaison de vidéos pour un affichage en temps réel

(84) Designated Contracting States:
**DE FR GB**

(30) Priority: **09.11.2007 US 937659**

(43) Date of publication of application:
**13.05.2009 Bulletin 2009/20**

(73) Proprietor: **MITSUBISHI ELECTRIC
CORPORATION
Chiyoda-ku
Tokyo 100-8310 (JP)**

(72) Inventors:
• **van Baar, Jeroen
Arlington, MA 02474 (US)**

• **Matusik, Wojciech
Lexington, MA 02420 (US)**

(74) Representative: **Pfenning, Meinig & Partner GbR
Patent- und Rechtsanwälte
Theresienhöhe 13
80339 München (DE)**

(56) References cited:
**EP-A- 0 946 058        WO-A-02/093916
US-A1- 2003 034 982     US-A1- 2004 017 386
US-A1- 2006 139 233**

**Description**

**Field of the Invention**

This invention relates generally to image processing, and more particularly to combining multiple input image sequences to generate a single output image sequence.

**Background of the Invention**

In digital imaging, there are two main ways that an output image can be generated from multiple input images. Compositing combines visual elements (objects) from separate input images to create the illusion that all of the elements are parts of the same scene. Mosaics and panoramas combine entire input images into a single output image. Typically, a mosaic consists of non-overlapping images arranged in some tessellation. A panorama usually refers to a wide-angle representation of a view.

It is desired to combine entire images from multiple input sequences (input videos) to generate a single output image sequence (output video). For example, in a surveillance application, it is desired to obtain a high-resolution image sequence of a relatively large outdoor scene. Typically, this could be done with a single camera by "zooming" out to increase the field of view. However, zooming decreases the clarity and detail of the output images.

The following types of combining methods are known: parallax analysis; depth layer decomposition; and pixel correspondences. In parallax analysis, motion parallax is used to estimate a 3D structure of a scene, which allows the images to be combined. Layer decomposition is generally restricted to scenes that can be decomposed into multiple depth layers. Pixel correspondences require stereo techniques and depth estimation. However, the output image often includes annoying artifacts, such as streaks and halos at depth edges. Generally, the prior art methods are complex and not suitable for real-time applications.

Known from the prior art (WO 02/093916 A) is the combining of low-resolution and high-resolution video streams into a single seamless display to a human observer. Provided are methods for the static and dynamic estimation of a homography mapping high-resolution to panoramic coordinates and allowing an accurate fusion of data. The prior art further knows (US 2006/139,233 A1) the composition of images from a primary image source and from one or more secondary image sources, wherein the secondary image source images are subjected to distortions before the primary image and the secondary images are combined. Finally, the combined image is subjected to a second distortion adapting the combined image to the display means.

Therefore, it is desired to combine input videos into an output video and display the output video in real-time.

Summary of the Invention

A set of input videos is acquired of a scene by multiple narrow-angle cameras. Each camera has a different field of view of the scene. That is, the fields of view are substantially abutting with minimal overlap. At the same time, a wide-angle camera acquires a wide-angle input video of the entire scene. A field of view of the wide-angle camera substantially overlaps the fields of view of the set of narrow-angle cameras.

The corresponding images of the narrow angle videos are then combined into a single output video, using the wide-angle video, so that the output video appears as having been acquired by a single camera. That is, a resolution of the output video is approximately the sum of the resolutions of the input videos. Also performed is a correction of color in the output video according to a temporally corresponding selected image of the wide-angle video.

Instead of determining a direct transformations between the various images that would generate a conventional mosaic, as is typically done in the prior art, the invention uses the wide-angle videos for correcting and combing the narrow-angle videos. Correction, according to the invention, is not limited to geometrical correction, as in the prior art, but also includes colorimetric correction. Colorimetric correction ensures that the output video can be displayed with uniform color and gain as if the output video was acquired by a single camera.

The invention also has as an objective the simultaneous acquisition and display of the videos with real-time performance. The invention does not require manual alignment and camera calibration. The amount of overlap, if any, between the views of the cameras can be minimized.

**Brief Description of the Drawings**

Figure 1A is a schematic of a system for combining input videos to generate an output video according to an embodiment of the invention;

Figure 1B is a schematic of a set of narrow-angle input images and a wide angle input image;

Figure 2 is a flow diagram of a method for combining input videos to generate an output video according to an embodiment of the invention;

Figure 3 is a front view of a display device according to an embodiment of the invention; and

Figure 4 shows an offset parameter according to an embodiment of the invention.

**Detailed Description of the Preferred Embodiment**

**Method and System Overview**

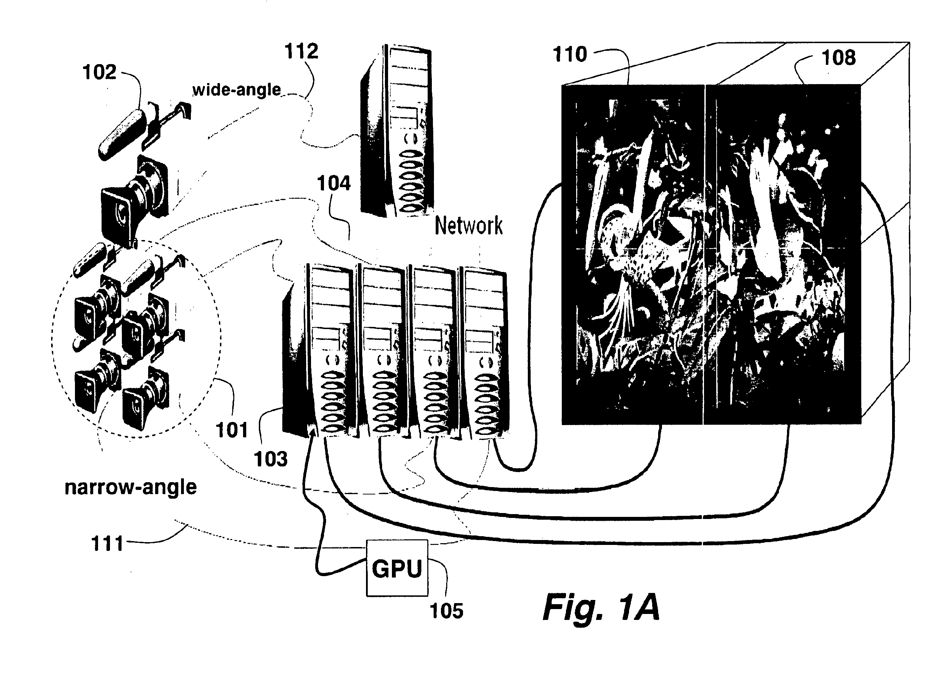

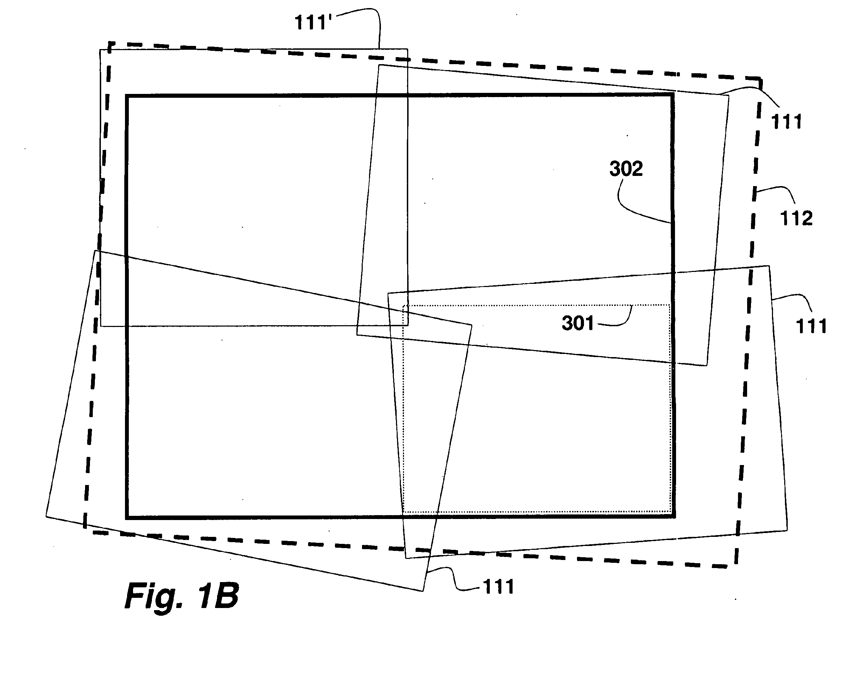

Figure 1 shows a system for combining a set of narrow-angle input videos 111 acquired of a scene by a set of narrow-angle cameras 101 to generate an output video 110 in real-time for a display device 108 according to an embodiment of our invention.

The input videos 111 are combined using a wide-angle input video 112 acquired by a wide-angle camera 102. The output video 110 can be presented on a display device 108. In one embodiment, the display device includes a set of projection display devices. In the preferred embodiment, there is one projector for each narrow-angle camera. The projectors can be front or rear.

Figure 1B shows a set of narrow angle images 111. Image 111' is a reference image described below. The wide-angle image 112 is indicated by dashes. As can be seen, and as an advantage, the input images do not need to be rectangular. In addition, there is no requirement that the input images are aligned with each other. The dotted line 301 is for one display screen, and the solid line 302 indicates a largest inscribed rectangle.

The terms wide-angle and narrow-angle as used herein are simply relative. That is, the field of view of the wide-angle camera 102 substantially overlaps the fields of view of the narrow-angle cameras 101. In fact, the narrow-angle cameras basically have a normal angle, and the wide-angle camera simply has a zoom factor of 2X. Our wide-angle camera should not be confused with a conventional fish-eye lens camera, which takes an extremely wide, hemispherical image. Our wide-angle camera does not have any noticeable distortion. If we use a conventional fish-eye lens, then we can correct the distortion of image 112 according to the lens distortion parameters.

There can be minimal overlap between the set of input videos 111. In the general case, the field of view of the wide-angle camera 102 should encompass the combined field of views of the set of narrow-angle cameras 101. In a preferred embodiment, the field of view of the wide-angle camera 102 is slightly larger than the combined views of the four narrow-angle cameras 101. Therefore, the resolution of the output video is approximately the sum of the resolutions of the set of input videos 111.

The cameras 101-102 are connected to a cluster of computers 103 via a network 104. The computers are conventional and include processors, memories and input/output interfaces by buses. The computers implement the method according to our invention.

For simplicity of this description, we describe details of the invention for the case with a single narrow-angle camera. Later, we describe how to extend the embodiments of the invention to multiple narrow-angle-resolution cameras.

**Wide-angle Camera**

The use of a wide-angle camera in our invention has several advantages. First, the overlap, if any, between the set of input videos 111 can be minimal. Second, misalignment errors are negligible. Third, the invention can be applied to complex scenes. Fourth, the output video can be corrected for both geometry and color.

With a large overlap between the wide-angle video 112 and the set of narrow-angle videos 111, a transform can be determined from image features. This makes our transform in planar regions of the scene less prone errors. Thus, overall alignment accuracy improves, and more complex scenes, in terms of depth complexity, can be aligned with a relatively small misalignment error. The wide-angle resolution video 112 provides both geometry and color correction information.

**System Configuration**

In one embodiment, the narrow-angle cameras 101 are arranged in a 2 x 2 array, and the single wide-angle camera 102 is arranged above or between the narrow-angle cameras as shown in Figure 1A. As described above, the field of view of the wide-angle camera combines the fields of view of the narrow-angle cameras 101.

Each camera is connected to one of the computers 103 via the network 104. Each computer is equipped with graphics hardware comprising a graphics processing unit (GPU) 105. In a preferred embodiment, the frame rates of the cameras are synchronized. However, this is not necessary if the number of moving elements (pixels) in the scene is small.

The idea behind the invention is that a modem GPU, such as used for high-speed computer graphic applications, can process images extremely fast, i.e., in real-time. Therefore, we load the GPU with transformation and geometry parameters to combine and transform the input videos in real-time as described below.

Each computer and GPU is connected to the display device 108 on which the output video is displayed. In a preferred embodiment, we use a 2x2 array of displays. Each display is connected to one of the computers. However, it should be understood that the invention can also be worked with different combinations of computers, GPUs and display devices. For example, the invention can be worked with a single computer, GPU and display device, and multiple cameras.

**Image Transformation**

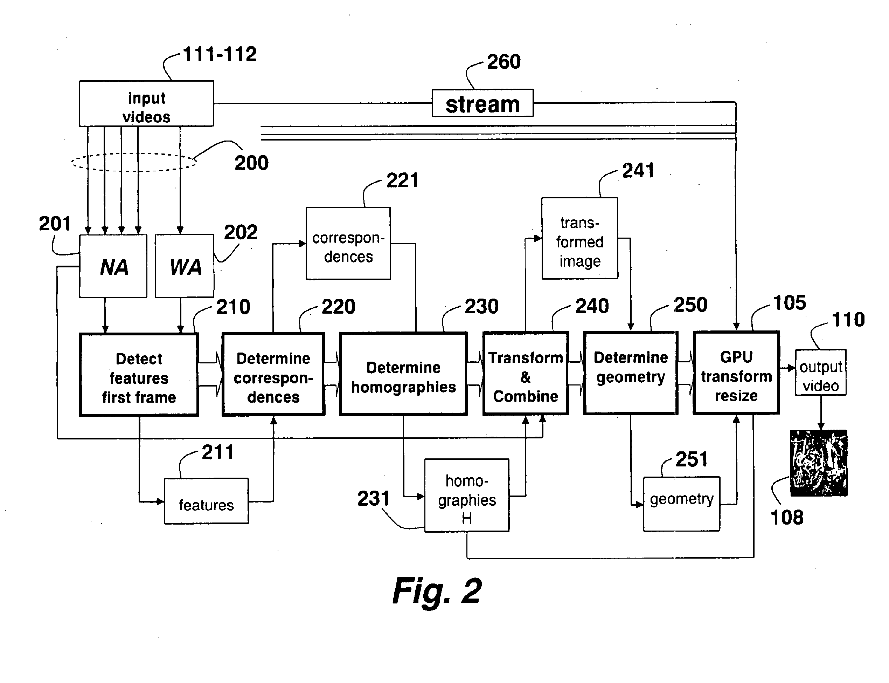

Figure 2 shows details of the method according to the invention. We begin with a set 200 of temporally corresponding selected images of each narrow-angle (*NA*) video 111 and the wide-angle (*WA*) video 112. By temporally corresponding, we mean that the selected images are acquired at about the same time. For example, the first image in each video. Exact correspondence in timing can be achieved by synchronizing the cameras. It should be noted, that set 200 of temporally corresponding images could be selected periodically to update GPU parameters as described below as needed.

For each selected *NA* image 201 and the corresponding *WA* image 202, we detect 210 features 211, as described below.

Then, we determine 220 correspondences 221 between the detected features.

From the correspondences, we determine 230 homographies 231 between the narrow-angle images 111 using the wide-angle video 112. The homographies allow us to transform and combine 240 the input images 201 to obtain a single transformed image 241.

The homography enables us to determine 250 the geometries 251 for a single largest inscribed rectangular image 302 that encompasses the transformed image. The geometry also takes into consideration a geometry of the display device 108, e.g., the arrangement and size of the one (or more) display screens. Essentially, the display geometry defines an appearance of the output video. The size can be specified in terms of pixels, e.g., the width and height, or the width and aspect ratio.

The homographies 231 between the narrow-angle videos and the geometry of the output video are stored in the GPUs 105 of the various processors 103.

At this point, subsequent images in the set of narrow-angle input videos 111 can be streamed 260 through the GPUs to produce the output video 110 in real-time according to the homographies and the geometry of the display screen. As described above, the GPU parameters can be updated dynamically as needed to adapt to a changing environment while streaming.

In the above, we assume that the scene contains a sufficient amount of static objects. In addition we assume that moving objects remain approximately at the same distance with respect to the cameras. The number of moving objects is not limited.

**Dynamic Update**

It should be understood, that the homographies, geometries and color correction can be periodically updated in the GPUs, e.g., once a minute or some other interval, to accommodate a changing scene and varying lighting conditions. This is particularly appropriate for outdoor scenes, where large objects can periodically enter and leave the scene. The updating can also be sensitive to moving objects or shadows in the scene.

**Feature Detection**

Due to the different field of views, features in the input images can have differences in scale. To accommodate for the scale differences, we use a scale invariant feature detector, e.g., a scale invariant feature transformation (SIFT), Lowe, "Distinctive image features from scale invariant keypoints," International Journal of Computer Vision, 60(2):91-110, 2004, incorporated herein by reference. Other feature detectors, such as a corner and line (edge) detectors can either be used instead, or to increase the number of features. It should be noted, that the feature detection can be accelerated by using the GPUs.

To determine 220 initial correspondences 221 between the features, we first determine a histogram of gradients (HoG) in a neighborhood of each feature. Features for which the difference between the HoGs is smaller than a threshold are candidates for the correspondences. We use the L2-norm as the distance metric.

**Projective Transformation**

The perspective transformation 240 during the combining can be approximated by 3x3 projective transformation matrices, or homographies 231. The homographies are determined from the correspondences 221 of the features 211. Given that some of the correspondence candidates could be falsely matched, we use a modified RANSAC approach to determine the homographies, Fischler et al., "Random sample consensus: A paradigm for model fitting with applications to image analysis and automated cartography," Commun. ACM, 24(6):381-395, 1981, incorporated herein by reference.

Rather than only attempting to find homographies with small projection errors, we require in addition that the number of correspondences that fit the homographies are larger than some threshold.

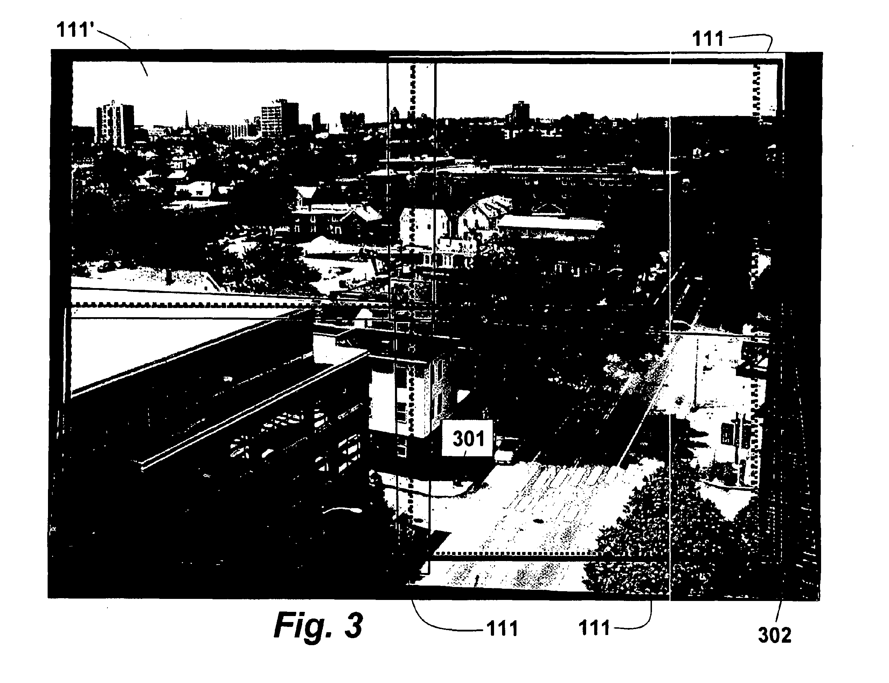

We determine a homography between each narrow-angle image 201 and the wide-angle image 202, denoted as $\mathbf{H}_{NA_i, WA_j}$, where *i* indexes the set of narrow-angle images, and *j* indexes the wide-angle images, if there are more than one. We select one of the narrow-angle images 111' , see Figure 3, as a reference images $NA_{ir}$. We transform the image i to that of the reference image by

$$H^{-1}{}_{NA_{ir},WA_j} \cdot H_{NA_i,WA_j}.$$

*If $i_r$ = i, then*

$$H^{-1}{}_{NA_{i_r},WA_j} \bullet H_{NA_{i_r},WA_j},$$

which is the identity matrix. We store each homography $H^{-1}{}_{NA_{ir}WA_j} \cdot H_{NA_i,WA_j}$ 231 in the GPU of the computer connected to the corresponding camera *i*.

**Lens Distortion**

Most camera lenses have some amount of distortion. As a result, straight lines in scenes appear as curves in images. In many applications, the lens distortion is corrected by estimating parameters of the first two terms of a power series. If the lens distortion parameters are known, than the correction can be implemented on the GPU as per pixel look-up operations.

**Additional Constraints**

Rather than determining the homographies 231 only from the correspondences 221, we can also include additional constraints by considering straight lines in images. We can detect lines in the images using a Canny edge detector. As an advantage, line correspondences can improve continuity across image boundaries. Points x and lines *l* are dual in projective geometry. Given the homography **H** between image $I_i$ and image $I_{i'}$, we have

$$x' = H \cdot x$$

$$l' = H^{-T} \cdot l,$$

where T is the transpose operator.

**Display Configuration**

After we have obtained the homographies 231, we determine the transformed and combined image 241 in the coordinate system of the reference image 111', as shown in Figure 3.

To determine which parts of the input images 111 are combined and displayed in the output image 110, the output image is partitioned according to a geometry of the display device 108. Figure 3 is a front view of four display devices. The dashed lines 301 indicate the seams between four display screens.

The first step locates the largest rectangle 302 inside the transformed and combined image 241. The largest rectangle can also conform to the aspect ratio of the display device. We further partition 301 the largest rectangle according to the configuration of the display device.

**Combining**

After the homographies and geometries have been determined and stored in the GPUs 105, we can transform and resize each individual image of the input videos stream 260 in real-time. The cropping is according to the geometry 251 of the display surface.

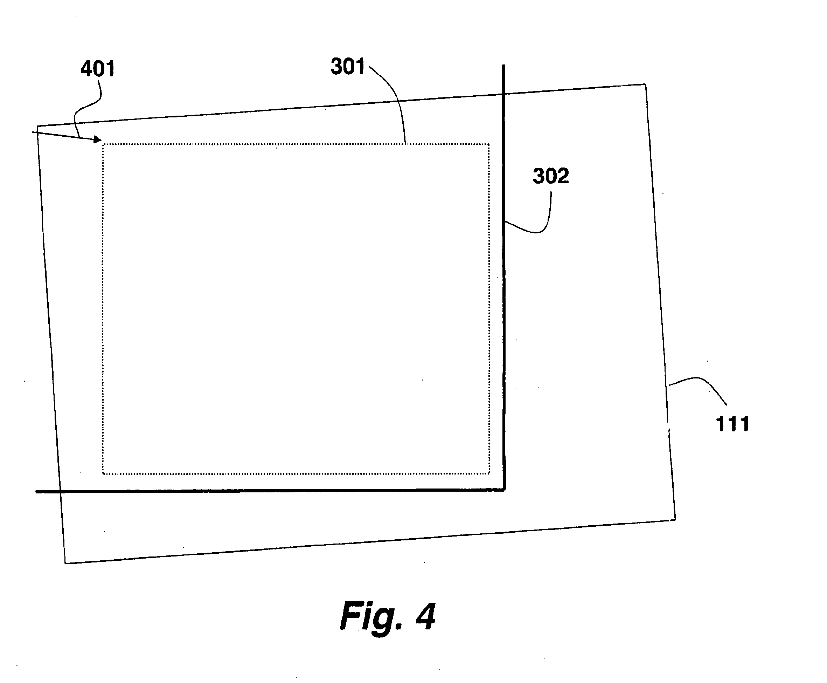

Therefore, the parameters that are stored in the GPUs include the 3x3 homographies used to transform the narrow-angle images to the coordinate system of the selected reference image 111' , the x and y offset 401 for each transformed image, see Figure 4, and the size (width and height) of each transformed input image. The offsets and size are determined from the combined image 241 and the configuration of the display device 108.

As described above, each image is transformed using the homographies 231. The transformation with the homography is a projective transformation. This operation is supported by the GPU 105. We can perform the transformation in the GPU in the following ways:

Per vertex: Transform the vertices (geometry) of a polygon, and apply the image as a texture map; and
Per pixel: For every pixel in the output image perform a lookup of input pixels, and the input pixels are combined into a single output pixel.

It should be noted that the GPU can perform the resizing to match the display geometry by interpolations within its texture function.

With graphics hardware support of the GPU, we can achieve real-time transformation, resizing and display for both of the above methods.

It should be noted that where input images overlap, the images can be blended into the output video using a multiband blending technique, U.S. 6,755,537, "Method for globally aligning multiple projected images," issued to Raskar et al., June 29, 2004, incorporated herein by reference. The blending maintains a uniform intensity across the output image.

**Color Correction**

Our color correction method includes the following steps. We determine a cluster of pixels in a local neighborhood near each feature in each input image 111. We match the cluster of pixels with adjacent or nearby clusters of pixels. Then, we determine an offset and 3x3 color transform between the images.

We cluster pixels by determining 3D histograms in the (RGB) color space of the input images. Although there can be some color transform between different images, peaks in the histogram generally correspond to clusters that represent the same part of the scene. We only consider clusters for which the number of pixels is larger than some threshold, because small clusters tend to lead to mismatches. Before accepting two corresponding clusters as a valid match, we perform an additional test on the statistics of the clusters. The statistics, e.g., the mean and standard deviation, are determined using the La*b* gamut map, which uses the device-independent CIELAB color space.

We determine the mean and standard deviation for each cluster, and also for the adjacent clusters. If the difference is less than some threshold, then we mark the corresponding clusters as a valid match. We repeat this process for all accepted clusters in the local neighborhoods of all corresponding features.

After the n correspondences have been processed, we determine the color transform as:

$$\begin{bmatrix} R_1 & G_1 & B_1 & 1 \\ \vdots & \vdots & \vdots & \vdots \\ R_n & G_n & B_n & 1 \end{bmatrix} \begin{bmatrix} R_{R'} & R_{G'} & R_{B'} \\ G_{R'} & G_{G'} & G_{B'} \\ B_{R'} & B_{G'} & B_{B'} \\ O_{R'} & O_{G'} & O_{B'} \end{bmatrix} = \begin{bmatrix} R'_1 & G'_1 & B'_1 \\ \vdots & \vdots & \vdots \\ R'_n & G'_n & B'_n \end{bmatrix}$$

$$\Rightarrow A \cdot X = B \Rightarrow X = A^+ \cdot B$$

where the matrix $A^+$ is the pseudoinverse transformed matrix $A$.

The above color transform is based on the content of the input images. To avoid some colors being overrepresented, we can track the peaks of the 3D histogram that are included. Peak locations that are already represented are skipped in favor of locations that have not yet been included.

As described above, we have treated each camera, processor, video stream and display device in isolation. Apart from the homographies and geometry parameters, no information is exchanged between the processors. However, we can determine which portion of the images should be sent over the network to be displayed on some other tiled display device.

We can also use multiple wide-angle cameras. In this case, we determine the geometry, i.e., position and orientation, between the cameras. We can either calibrate the cameras off-line, or require an overlap among the cameras, and base the geometry based on that.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

**Claims**

1. A method for combining images in a set of narrow-angle videos for display in real-time, comprising:

   acquiring a set of narrow-angle videos of a scene;
   acquiring a wide-angle video of the scene, in which a field of view in the wide-angle video substantially overlaps fields of view in the narrow-angle videos;
   determining homographies among the narrow-angle videos using a set of temporally corresponding selected images of each narrow-angle video and a temporally corresponding selected image of the wide-angle video;
   transforming and combining the temporally corresponding selected images of the narrow-angle videos into a transformed image based on said homographies;
   determining a geometry of an output video according to the transformed image and a geometry of a display screen of an output device;
storing the homographies and the geometry of the display screen in a graphic processor unit; and
transforming and combining subsequent images in the set of narrow-angle videos in the graphic processor unit
according to the hormographies and the geometry to produce the output video in real-time,
**characterized by**
correcting color in the output video according to the temporally corresponding selected image of the wide-angle
video.

**2.** The method of claim 1, in which the fields of view in the narrow-angle videos are substantially abutting with minimal
overlap.

**3.** The method of claim 1, in which a resolution of the output video is approximately a sum of resolutions of the set of
narrow-angle videos.

**4.** The method of claim 1, further comprising:

updating periodically the homographies in the graphic processor unit.

**5.** The method of claim 1, in which the set of narrow-angle videos are acquired by a set of narrow-angle cameras and
the wide-angle video is acquired by a wide-angle camera, and further comprising:

connecting each camera to a computer, and in which each computer includes the graphic processor unit.

**6.** The method of claim 5, in which there is one display screen for each narrow-angle video.

**7.** The method of claim 1, further comprising:

detecting features in the temporally corresponding selected images;
determining correspondences between the features to determine the homographies.

**8.** The method of claim 1, in which the geometry of the output video depends on a largest rectangle inscribed in the
transformed image.

**9.** The method of claim 1, in which the geometry of the output video includes offsets for the set of narrow-angle videos
and the geometry of the display screen includes a size of the display screen.

**10.** The method of claim 1, further comprising:

blending the subsequent images in the set of narrow-angle videos during the combining.

**11.** The method of claim 1, in which the selected images are first images in each input video.

**12.** A system for combining videos for display in real-time, comprising:

a set of narrow-angle cameras configured to acquire a set of narrow-angle videos of a scene;
a wide-angle camera configured to acquire a wide-angle video of the scene, in which a field of view in the wide-
angle video substantially overlaps fields of view in the narrow-angle videos;
means for determining homographies among the narrow-angle videos using a set of temporally corresponding
selected images of each narrow-angle video and a temporally corresponding selected image of the wide-angle
video;
means for transforming and combining the temporally corresponding selected images of the narrow-angle
videos into a transformed image based on said homographies; means for determining a geometry of an output
video according to the transformed image and a geometry of a display screen of an output device;
a graphic processor unit configured to store the homographies and the geometry of the display screen; and
means for transforming and combining subsequent images in the set of narrow-angle videos in the graphic
processor unit according to the homographies and the geometry to produce the output video in real-time,
**characterized by**
means for correcting color in the output video according to the temporally corresponding selected image of the wide-angle video.

**Patentansprüche**

1. Verfahren zum Kombinieren von Bildern in einem Satz von Schmalwinkelvideos zur Anzeige in Echtzeit, welches aufweist:

   Erwerben eines Satzes von Schmalwinkelvideos einer Szene;
   Erwerben eines Weitwinkelvideos der Szene, wobei ein Sichtfeld des Weitwinkelvideos im Wesentlichen mit Sichtfeldern in den Schmalwinkelvideos überlappt;
   Bestimmen von Homogrammen unter den Schmalwinkelvideos unter Verwendung eines Satzes von zeitlich entsprechenden ausgewählten Bildern jedes Schmalwinkelvideos und eines zeitlich entsprechenden ausgewählten Bildes des Weitwinkelvideos;
   Transformieren und Kombinieren der zeitlich entsprechenden ausgewählten Bilder der Schmalwinkelvideos in ein transformiertes Bild auf der Grundlage der Homogramme;
   Bestimmen einer Geometrie eines Ausgangsvideos gemäß dem transformierten Bild und einer Geometrie eines Anzeigeschirms einer Ausgabevorrichtung;
   Speichern der Homogramme und der Geometrie des Anzeigeschirms in einer Grafikprozessoreinheit; und
   Transformieren und Kombinieren nachfolgender Bilder in dem Satz von Schmalwinkelvideos in der Grafikprozessoreinheit gemäß den Homogrammen und der Geometrie, um das Ausgangsvideo in Echtzeit zu erzeugen, **gekennzeichnet durch**
   Korrigieren von Farbe in dem Ausgangsvideo gemäß dem zeitlich entsprechenden ausgewählten Bild des Weitwinkelvideos.

2. Verfahren nach Anspruch 1, bei dem die Sichtfelder in den Schmalwinkelvideos im Wesentlichen mit minimaler Überlappung aneinandergrenzen.

3. Verfahren nach Anspruch 1, bei dem eine Auflösung des Ausgangsvideos angenähert eine Summe von Auflösungen des Satzes von Schmalwinkelvideos ist.

4. Verfahren nach Anspruch 1, weiterhin aufweisend:

   periodisches Aktualisieren der Homogramme in der Grafikprozessoreinheit.

5. Verfahren nach Anspruch 1, bei dem der Satz von Schmalwinkelvideos durch einen Satz von Schmalwinkelkameras erworben wird und das Weitwinkelvideo durch eine Weitwinkelkamera erworben wird, und weiterhin aufweisend:

   Verbinden jeder Kamera mit einem Computer, und bei dem jeder Computer die Grafikprozessoreinheit enthält.

6. Verfahren nach Anspruch 5, bei dem ein Anzeigeschirm für jedes Schmalwinkelvideo vorgesehen ist.

7. Verfahren nach Anspruch 1, weiterhin aufweisend:

   Erfassen von Merkmalen in den zeitlich entsprechenden ausgewählten Bildern;
   Bestimmen von Entsprechungen zwischen den Merkmalen, um die Homogramme zu bestimmen.

8. Verfahren nach Anspruch 1, bei dem die Geometrie des Ausgangsvideos von einem größten Rechteck, das in das transformierte Bild geschrieben ist, abhängt.

9. Verfahren nach Anspruch 1, bei dem die Geometrie des Ausgangsvideos Versetzungen für den Satz von Schmalwinkelvideos enthält und die Geometrie des Anzeigeschirms eine Größe des Anzeigeschirms enthält.

10. Verfahren nach Anspruch 1, weiterhin aufweisend:

   Mischen der nachfolgenden Bilder in dem Satz von Schmalwinkelvideos während des Kombinierens.

**11.** Verfahren nach Anspruch 1, bei dem die ausgewählten Bilder erste Bilder in jedem Eingangsvideo sind.

**12.** System zum Kombinieren von Videos für eine Anzeige in Echtzeit, welches aufweist:

einen Satz von Schmalwinkelkameras, die ausgebildet sind zum Erwerben eines Satzes von Schmalwinkelvideos einer Szene;

eine Weitwinkelkamera, die ausgebildet ist zum Erwerben eines Weitwinkelvideos der Szene, wobei ein Sichtfeld in dem Weitwinkelvideo im Wesentlichen Sichtfelder in den Schmalwinkelvideos überlappt;

Mittel zum Bestimmen von Homogrammen unter den Schmalwinkelvideos unter Verwendung eines Satzes von zeitlich entsprechenden ausgewählten Bildern jedes Schmalwinkelvideos und eines zeitlich entsprechenden ausgewählten Bildes des Weitwinkelvideos;

Mittel zum Transformieren und Kombinieren der zeitlich entsprechenden ausgewählten Bilder der Schmalwinkelvideos in ein transformiertes Bild auf der Grundlage der Homogramme;

Mittel zum Bestimmen einer Geometrie eines Ausgangsvideos gemäß dem transformierten Bild und einer Geometrie eines Anzeigeschirms einer Ausgabevorrichtung;

eine Grafikprozessoreinheit, die ausgebildet ist zum Speichern der Homogramme und der Geometrie des Anzeigeschirms; und

Mittel zum Transformieren und Kombinieren nachfolgender Bilder in dem Satz von Schmalwinkelvideos in der Grafikprozessoreinheit gemäß den Homogrammen und der Geometrie, um das Ausgangsvideo in Echtzeit zu erzeugen,

**gekennzeichnet durch**

Mittel zum Korrigieren von Farbe in dem Ausgangsvideo entsprechend dem zeitlich entsprechenden ausgewählten Bild des Weitwinkelvideos.

## Revendications

**1.** Procédé pour combiner des images dans un ensemble de vidéos à angle étroit pour affichage en temps réel, comprenant les étapes consistant à :

acquérir un ensemble de vidéos à angle étroit d'une scène ;

acquérir une vidéo à angle large de la scène, un champ de vision de la vidéo à angle large chevauchant sensiblement les champs de vision des vidéos à angle étroit ;

déterminer des homographies parmi les vidéos à angle étroit en utilisant un ensemble d'images sélectionnées en correspondance temporaire de chaque vidéo à angle étroit et une image sélectionnée en correspondance temporaire de la vidéo à angle large ;

transformer et combiner les images sélectionnées en correspondance temporaire de vidéos à angle étroit en une image transformée sur la base desdites homographies ;

déterminer une géométrie d'une vidéo de sortie selon l'image transformée et une géométrie d'un écran d'affichage d'un dispositif de sortie ;

stocker les homographies et la géométrie de l'écran d'affichage dans une unité de processeur graphique ; et transformer et combiner des images suivantes de l'ensemble de vidéos à angle étroit dans l'unité de processeur graphique selon les homographies et la géométrie pour produire la vidéo de sortie en temps réel,

**caractérisé par** l'étape consistant à

corriger la couleur dans la vidéo de sortie selon l'image sélectionnée en correspondance temporaire de la vidéo à angle large.

**2.** Procédé selon la revendication 1, dans lequel les champs de vision des vidéos à angle étroit s'appuient sensiblement l'un sur l'autre avec un chevauchement minimal.

**3.** Procédé selon la revendication 1, dans lequel une résolution de la vidéo de sortie est environ une somme de résolutions de l'ensemble de vidéos à angle étroit.

**4.** Procédé selon la revendication 1, comprenant en outre l'étape consistant à : mettre à jour de manière périodique les homographies dans l'unité de processeur graphique.

**5.** Procédé selon la revendication 1, dans lequel l'ensemble de vidéos à angle étroit est acquis par un ensemble de caméras à angle étroit et la vidéo à angle large est acquis par une caméra angle large et comprenant en outre l'étape consistant à :

> raccorder chaque appareil photo à un ordinateur, et dans lequel chaque ordinateur comprend l'unité de processeur graphique.

**6.** Procédé selon la revendication 5, dans lequel on trouve un écran d'affichage pour chaque vidéo à angle étroit.

**7.** Procédé selon la revendication 1, comprenant en outre les étapes consistant à : détecter des caractéristiques dans les images sélectionnées en correspondance temporaire ;
déterminer des correspondances entre les caractéristiques afin de déterminer les homographies.

**8.** Procédé selon la revendication 1, dans lequel la géométrie de la vidéo de sortie dépend d'un rectangle plus grand inscrit dans l'image transformée.

**9.** Procédé selon la revendication 1, dans lequel la géométrie de la vidéo de sortie comprend des décalages pour l'ensemble de vidéos à angle étroit et la géométrie de l'écran d'affichage comprend une taille de l'écran d'affichage.

**10.** Procédé selon la revendication 1, comprenant en outre l'étape consistant à : mélanger les images suivantes dans l'ensemble de vidéos à angle étroit pendant la combinaison.

**11.** Procédé selon la revendication 1, dans lequel les images sélectionnées sont les premières images de chaque vidéo d'entrée.

**12.** Système pour combiner des vidéos pour un affichage en temps réel, comprenant :

> un ensemble de caméras à angle étroit configurées pour acquérir un ensemble de vidéos à angle étroit d'une scène ;
> une caméra à angle large configurée pour acquérir une vidéo à angle large de la scène, dans lequel un champ de vision dans la vidéo à angle large chevauche sensiblement les champs de vision dans les vidéos à angle étroit ;
> des moyens pour déterminer des homographies parmi les vidéos à angle étroit en utilisant un ensemble d'images sélectionnées en correspondance temporaire de chaque vidéo à angle étroit et une image sélectionnée en correspondance temporaire de la vidéo à angle large ;
> des moyens pour transformer et combiner l'image sélectionnée en correspondance temporaire des vidéos à angle étroit dans une image transformée sur la base desdites homographies ;
> des moyens pour déterminer une géométrie d'une vidéo de sortie selon l'image transformée et une géométrie d'un écran d'affichage d'un dispositif de sortie ;
> une unité de processeur graphique configurée pour stocker les homographies et la géométrie de l'écran d'affichage ; et
> des moyens pour transformer et combiner des images suivantes dans l'ensemble de vidéos à angle étroit de l'unité de processeur graphique selon les homographies et la géométrie afin de produire la vidéo de sortie en temps réel,
> **caractérisé par**
> des moyens pour corriger la couleur dans la vidéo de sortie selon l'image sélectionnée en correspondance temporaire de l'image à angle large.

Fig. 1A

**Fig. 1B**

EP 2 059 046 B1

*Fig. 2*

EP 2 059 046 B1

**Fig. 3**

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02093916 A
- US 2006139233 A1
- US 6755537 B

**Non-patent literature cited in the description**

- **Lowe.** Distinctive image features from scale invariant keypoints. *International Journal of Computer Vision,* 2004, vol. 60 (2), 91-110
- **Fischler et al.** Random sample consensus: A paradigm for model fitting with applications to image analysis and automated cartography. *Commun. ACM,* 1981, vol. 24 (6), 381-395